# DEMANDE DE BREVET EUROPEEN

(11) **EP 1 235 140 A1**
(43) Date de publication de la demande: **28.08.2002**
(21) Numéro de dépôt: 02290402.3
(22) Date de dépôt: 20.02.2002
(51) Int. Cl.: G06F 9/38, G06F 9/32

(54) **Procédé de gestion d'instructions de branchement au sein d'un processeur**

(30) Priorité: 27.02.2001 FR 0102645
(71) Demandeur: STMicroelectronics S.A., 92120 Montrouge (FR)
(72) Inventeur: Cofler, Andrew, 38340 Voreppe (FR); Merlande, Anne, 38120 Saint-Egr-ve (FR); Ferroussat, Sébastien, 38600 Fontaine (FR)
(74) Mandataire: Casalonga, Axel

(57) **Abrégé**

Le processeur comporte une mémoire-programme contenant des instructions de programe, et un coeur de processeur CR contenant plusieurs unités de traitement AU, DU et une unité centrale CU. L'unité centrale, à la réception d'une instruction de programme, délivre des instructions correspondantes aux différentes unité de traitement. Le coeur de processeur CR est cadencé par un signal d'horloge et une instruction de branchement reçue par l'unité centrale CU au cours d'un cycle courant, est traitée au cours de ce cycle courant.

## Description

L'invention concerne les processeurs, notamment les processeurs de traitement numérique du signal (DSP :"Digital Signal Processors" en langue anglaise), et plus particulièrement la gestion d'instructions de branchement au sein d'un tel processeur.

Un processeur comporte généralement plusieurs unités de traitement fonctionnant en parallèle. Classiquement, il est prévu en tant qu'unités de traitement, un module arithmétique et logique, un module d'adressage et un module de gestion de branchement. Outre ces unités de traitement, le processeur comporte généralement une unité centrale (unité de contrôle) qui dialogue avec la mémoire-programme et délivre aux différentes unités de traitement, des instructions élémentaires encore communément appelées micro-instructrions.

Parmi les instructions délivrées aux unités de traitement, figurent des instructions dites "de branchement", qui sont délivrées au module ou à l'unité de gestion de branchement. Une instruction de branchement est une instruction impliquant une rupture de séquence dans le séquencement normal des instructions. En d'autres termes, si, comme il est classique en la matière, un compteur de programme est agencé pour délivrer des valeurs successives correspondant à des adresses consécutives dans la mémoire-programme, une instruction de branchement aura pour effet de modifier à un instant donné la valeur courante du compteur de programme de façon à forcer le pointeur d'adresse sur une adresse donnée de la mémoire-programme.

Par ailleurs, les instructions de branchement peuvent être conditionnelles, par exemple gardées, comme cela sera expliqué ci-après.

Toutes les instructions de branchement nécessitent d'atteindre l'unité de branchement avant d'être effectivement traitées. Or, l'unité de branchement est généralement "au bas" de l'architecture pipelinée du processeur, ce qui implique un temps de latence relativement important avant qu'une instruction de branchement ne soit effectivement traitée.

L'invention vise à apporter une solution à ce problème.

L'invention a pour but de proposer un mécanisme de gestion des instructions de branchement totalement différent de celui existant jusqu'à maintenant, et qui permette une amélioration globale de la latence de branchement.

L'invention s'applique tout particulièrement mais non nécessairement à un processeur à architecture dite "découplée".

L'invention propose donc un procédé de gestion d'instructions de branchement au sein d'un processeur, le processeur comportant une mémoire-programme contenant des instructions de programme, et un coeur de processeur contenant plusieurs unités de traitement et une unité centrale. L'unité centrale, à la réception d'une instruction de programme, délivre des instructions correspondantes aux différentes unités de traitement.

Selon une caractéristique générale de l'invention, le coeur de processeur étant cadencé par un signal d'horloge, une instruction de branchement reçue par l'unité centrale au cours d'un cycle courant du signal d'horloge, est traitée au cours de ce cycle courant.

Ainsi, selon l'invention, le module de branchement est transféré dans l'unité centrale, ce qui permet de traiter beaucoup plus rapidement les instructions de branchement.

Ceci étant, des instructions de branchement peuvent utiliser le contenu d'un ou de plusieurs registres de pointage d'adresse qui ne sont pas forcément incorporés dans l'unité centrale. Ainsi, à titre d'exemple, ces registres de pointage d'adresse peuvent être incorporés dans une première unité de traitement, par exemple l'unité d'adressage. Et, le fait de déplacer la fonction de branchement dans l'unité centrale, pose le problème de la validité du contenu des registres de pointage d'adresse lorsque ceux-ci sont incorporés dans une unité de traitement différente de l'unité centrale, et qu'ils sont accédés à des cycles temporels postérieurs au cycle courant au cours duquel l'instruction de branchemént est examinée.

L'invention apporte également une solution à ce problème.

Ainsi, selon un mode de mise en oeuvre de l'invention, dans lequel une première unité de traitement, par exemple l'unité d'adressage, contient au moins un registre de pointage d'adresse, et dans lequel une instruction de branchement utilise le contenu d'au moins l'un des registres de pointage d'adresse, on effectue au début dudit cycle courant un contrôle de la validité du contenu du registre de pointage concerné. Ladite instruction de branchement est alors effectivement reçue par l'unité centrale et traitée si le contenu est déclaré valide. Et, dans le cas contraire, cette instruction de branchement est maintenue en attente de traitement (par exemple dans un registre-tampon disposé en tête de l'unité centrale) jusqu'à ce que le contenu soit déclaré valide.

Ce contrôle de validité peut être au sens de l'invention direct ou indirect. Plus précisément, on pourrait l'effectuer directement sur le registre de pointage architectural contenu dans l'unité d'adressage. Mais on peut l'effectuer aussi indirectement sur ce registre architectural. Ainsi, une façon particulièrement simple d'effectuer le contrôle de la validité du contenu des registres de pointage d'adresse, compatible avec une latence minimum, consiste à recopier le contenu de chaque registre de pointage d'adresse dans un registre dupliqué de pointage d'adresse. Le contrôle de la validité du contenu du registre de pointage concerné, est alors un contrôle de la validité du contenu du registre dupliqué correspondant.

Ce contrôle de validité prend en compte la gestion des instructions modificatrices destinée à modifier le contenu d'un registre de pointage d'adresse.

Ainsi, selon un mode de mise en oeuvre de l'invention, à chaque fois que l'unité centrale reçoit une instruction modificatrice destinée à modifier le contenu d'un registre de pointage d'adresse, et temporellement plus ancienne qu'une instruction de branchement impliquant ce registre de pointage d'adresse, le contrôle de validité du contenu du registre dupliqué correspondant prend en compte le fait que cette instruction modificatrice a été ou non traitée par ladite première unité, par exemple l'unité d'adressage.

Ainsi, par exemple, en pratique, à chaque fois qu'une instruction modificatrice destinée à modifier le contenu d'un registre de pointage d'adresse est reçue par l'unité centrale, on incrémente un compteur associé à ce registre. A chaque fois que cette instruction modificatrice a été traitée par l'unité d'adressage, on décrémente le compteur. Et, lorsqu'une instruction de branchement impliquant ce registre est prête à être délivrée à l'unité centrale, ledit contrôle de validité comporte le contrôle de la valeur du compteur, le contenu du registre dupliqué correspondant audit registre de pointage d'adresse impliqué étant déclaré valide si la valeur du compteur est égale à zéro.

Parmi les instructions délivrées aux unités de traitement, figurent des instructions dites "gardées" permettant une écriture plus performante du code-programme.

L'utilisation d'instructions gardées dans un processeur est déjà connue de l'homme du métier, par exemple par la demande de brevet européen n° 1 050 803. On rappelle ici brièvement le principe des instructions gardées, l'homme du métier pouvant se référer pour plus de détails, si nécessaire, à la demande de brevet européen précitée.

Une instruction gardée est une instruction affectée d'une indication dite "de garde", en pratique un bit de garde pouvant prendre la valeur 0 ou 1. L'instruction gardée sera alors exécutée ou non en fonction de la valeur du bit de garde, c'est-à-dire de l'indication de garde. Toutes les valeurs binaires des indications de garde, pouvant être au nombre de seize par exemple, sont contenues dans un registre dit "registre d'indications de garde". Ce registre centralisé est incorporé au sein d'une unité de traitement, par exemple l'unité arithmétique et logique, et contient à chaque instant les valeurs courantes des indications ou bits de garde. Les valeurs de ces indications de garde peuvent être modifiées par des instructions spécifiques dites "instructions modificatrices".

Pour lire la valeur d'une indication de garde associée à une instruction gardée, l'unité de traitement qui reçoit cette instruction gardée et qui n'a pas un accès direct au registre des indications de garde, requiert un transfert de la valeur de l'indication de garde depuis l'unité de traitement qui détient le registre des indications de garde. En d'autres termes, la délivrance d'une instruction gardée à une unité de traitement qui ne détient pas le registre des indications de garde, provoque la délivrance à l'unité de traitement qui est la gardienne du registre des indications de garde, d'une instruction dite "de transmission" qui est destinée à faire transmettre à l'unité de traitement qui reçoit l'instruction gardée, la valeur de l'indication de garde associée à cette instruction gardée.

Et, l'instruction gardée est maintenue dans l'étage de tête (étage de sortie) de la mémoire d'instructions du type FIFO (premier entré-premier sorti), associée à cette unité de traitement, jusqu'à ce que cette dernière reçoive de l'unité de traitement qui détient le registre des indications de garde, ladite valeur de l'indication de garde associée à cette instruction gardée. Ce n'est que lorsque l'unité de traitement qui détient le registre des indications de garde, aura exécuté l'instruction de transmission, que la valeur correspondante de l'indication de garde sera transmise à l'unité de traitement requérante, de façon que celle-ci puisse ou non exécuter son instruction gardée.

Ceci s'applique tout particulièrement aux instructions de branchement gardées, en particulier lorsque l'unité qui détient le registre des indications de garde est par exemple l'unité arithmétique et logique. Et, il résulte de tout ceci que ce transfert de l'indication de garde depuis l'unité arithmétique et logique vers le module de branchement consomme encore un nombre de cycles du signal d'horloge qui affecte la latence de branchement.

L'invention apporte également une solution à ce problème.

Plus précisément, selon un mode de mise en oeuvre de l'invention, dans lequel une deuxième unité de traitement, par exemple l'unité arithmétique et logique, contient un registre d'indication de garde, en présence d'une instruction de branchement gardée, on effectue au début dudit cycle courant du signal d'horloge, un contrôle de la validité de la valeur de l'indication de garde affectée à ladite instruction de branchement et contenue dans le registre d'indication de garde. Et, ladite instruction de branchement gardée est effectivement reçue par l'unité centrale et traitée (c'est-à-dire qu'elle sera exécutée ou non en fonction de la valeur de l'indication de garde) si la valeur de l'indication de garde correspondante est déclarée valide. Et, dans le cas contraire, cette instruction de branchement gardée est maintenue en attente de traitement jusqu'à ce que la valeur de l'indication de garde correspondante soit déclarée valide.

Là encore, comme pour les registres de pointage d'adresse, ce contrôle peut être direct ou indirect. Ainsi, d'une façon analogue à ce qui a été évoqué pour la recopie des registres de pointage d'adresse, il est avantageusement prévu, selon un mode de mise en oeuvre du procédé, que le contenu du registre d'indications de garde soit recopié dans un registre dupliqué d'indications de garde. Le contrôle dè la validité de la valeur d'une indication de garde est alors un contrôle de la validité de la valeur de l'indication de garde correspondante contenue dans le registre dupliqué d'indications de garde.

Là encore, il convient de tenir compte de la présence éventuelle d'une instruction modificatrice destinée à modifier la valeur d'une indication de garde contenue dans le registre des indications de garde, et temporellement plus ancienne qu'une instruction de branchement gardée. Ainsi, selon un mode de mise en oeuvre de l'invention, à chaque fois que l'unité centrale reçoit une instruction modificatrice destinée à modifier la valeur d'une indication de garde et temporellement plus ancienne qu'une instruction de branchement gardée par ladite indication de garde, le contrôle de validité de la valeur de l'indication de garde contenue dans le registre dupliqué prend en compte le fait que cette instruction modificatrice a été ou non traitée par ladite deuxième unité, c'est-à-dire l'unité qui détient effectivement le registre des indications de garde, à savoir l'unité arithmétique et logique.

Selon un mode de mise en oeuvre de l'invention, le coeur de processeur comporte une deuxième mémoire de type FIFO associée à ladite deuxième unité de traitement et destinée à stocker temporairement les instructions qui sont destinées à cette deuxième unité de traitement. Et, à chaque fois que l'unité centrale reçoit une instruction modificatrice destinée à modifier la valeur d'une indication de garde, on initialise un compteur, cadencé par le signal d'horloge, à une valeur initiale correspondant au nombre de cycles d'horloge nécessaires pour que cette instruction modificatrice soit stockée dans cette deuxième mémoire. Et, le contrôle de validité prend en compte à la fois :
- la valeur courante du compteur,
- la présence ou l'absence de l'instruction modificatrice dans la mémoire, et
- le fait que le registre des indications de garde a ou non été mis à jour par cette instruction modificatrice après que celle-ci ait quitté ladite deuxième mémoire.

Selon un mode de mise en oeuvre du procédé selon l'invention, à chaque fois qu'on extrait une instruction de la deuxième mémoire, on incrémente un compteur de lecture. De même, à chaque fois qu'on stocke une instruction dans la deuxième mémoire, on incrémente un compteur d'écriture.

Par ailleurs, à chaque fois qu'on stocke dans la deuxième mémoire une instruction modifiant la valeur d'une indication de garde, on mémorise la valeur courante du compteur d'écriture. Et, la détermination du caractère toujours présent d'une instruction modificatrice dans la deuxième mémoire prend en compte le résultat de la comparaison de ladite valeur courante mémorisée du compteur d'écriture avec la valeur courante du compteur de lecture.

En d'autres termes, on détermine si une instruction modificatrice qui a été écrite dans la deuxième mémoire est toujours présente dans cette deuxième mémoire, en utilisant la comparaison de la valeur courante mémorisée du compteur d'écriture avec la valeur courante du compteur de lecture.

En pratique, le compteur de lecture et le compteur d'écriture ont avantageusement une taille binaire identique égale à la profondeur de la deuxième mémoire. On associe alors, selon un mode de mise en oeuvre du procédé, à chaque compteur, un bit de dépassement changeant de valeur à chaque fois que le compteur correspondant revient à sa valeur initiale. Et, à chaque fois qu'on stocke dans la deuxième mémoire une instruction modifiant la valeur d'une indication de garde, on mémorise également la valeur courante du bit de dépassement du compteur d'écriture. Et, afin de tenir compte du fait que le pointeur de lecture et le pointeur d'écriture de la deuxième mémoire peuvent se situer dans deux fenêtres "circulaires" différentes, la détermination du caractère toujours présent de l'instruction modificatrice dans la deuxième mémoire prend également en compte le résultat de la comparaison de la valeur courante du bit de dépassement du compteur de lecture avec ladite valeur mémorisée du bit de dépassement du compteur d'écriture.

L'invention a également pour objet un processeur, en particulier un processeur de traitement numérique du signal, comportant une mémoire-programme contenant les instructions de programme, et un coeur de processeur contenant plusieurs unités de traitement et une unité centrale apte, à la réception d'une instruction de programme, à délivrer les instructions correspondantes aux différentes unités de traitement.

Selon une caractéristique générale de l'invention, le coeur de processeur étant cadencé par un signal d'horloge, l'unité centrale comporte un module de branchement apte à recevoir une instruction de branchement au cours d'un cycle courant d'horloge, et à traiter cette instruction de branchement au cours de ce cycle courant.

Selon un mode de réalisation de l'invention, une première unité de traitement, par exemple l'unité d'adressage, contient au moins un registre de pointage d'adresse. Une instruction de branchement utilise le contenu d'au moins l'un des registres de pointage d'adresse. L'unité centrale comporte des premiers moyens de contrôle de validité aptes à effectuer au début dudit cycle courant un contrôle de la validité du contenu dudit registre de pointage concerné. Et, l'instruction de branchement est effectivement reçue par l'unité centrale et traitée si le contenu est déclaré valide, tandis que dans le cas contraire, cette instruction de branchement est maintenue en attente de traitement jusqu'à ce que le contenu soit déclaré valide.

Selon un mode de réalisation de l'invention, l'unité centrale comporte, pour chaque registre de pointage d'adresse, un registre dupliqué de pointage d'adresse, dont le contenu est une copie du registre de pointage d'adresse correspondant. Les premiers moyens de contrôle de validité sont alors aptes à contrôler la validité du contenu du registre dupliqué correspondant.

Selon un mode de réalisation de l'invention, l'unité centrale comporte des premiers moyens d'élaboration, aptes, à chaque fois que l'unité centrale reçoit les instructions modificatrices destinées à modifier le contenu d'un registre de pointage d'adresse, et temporellement plus ancienne qu'une instruction de branchement impliquant ce registre de pointage d'adresse, à élaborer un premier signal drapeau représentatif du fait que cette instruction modificatrice a été ou non traitée par ladite première unité, par exemple l'unité d'adressage. Les premiers moyens d'élaboration comportent par exemple :
- un compteur associé à chaque registre dupliqué de pointage d'adresse,
- des moyens d'incrémentation aptes à chaque fois qu'une instruction modificatrice destinée à modifier le contenu d'un registre de pointage d'adresse est reçue par l'unité centrale, à incrémenter le compteur associé à ce registre,
- des moyens de décrémentation aptes à chaque fois que cette instruction modificatrice a été traitée par la première unité de traitement, à décrémenter le compteur,
- des moyens de comparaison aptes à comparer la valeur du compteur à la valeur nulle, et à délivrer le premier signal drapeau dont la valeur est représentative du résultat de ladite comparaison.

Les premiers moyens de contrôle de validité contrôlent la valeur du premier signal drapeau. Et, le contenu du registre dupliqué correspondant audit registre de pointage d'adresse impliqué, est déclaré valide si la valeur du signal drapeau correspond à une valeur du compteur égale à zéro.

Selon un mode de réalisation de l'invention, plus particulièrement adapté au cas des instructions de branchement gardées, une deuxième unité de traitement, par exemple l'unité arithmétique et logique, contient un registre d'indications de garde. L'unité centrale comporte des deuxièmes moyens de contrôle de validité aptes en présence d'une instruction de branchement gardée, à effectuer au début dudit cycle courant, un contrôle de la validité de la valeur de l'indication de garde affectée à ladite instruction de branchement contenue dans le registre d'indication de garde. Ladite instruction de branchement gardée est effectivement reçue par l'unité centrale et traitée, si la valeur de l'indication de garde correspondante est déclarée valide, et, dans le cas contraire, cette instruction de branchement gardée est maintenue en attente de traitement jusqu'à ce que la valeur de l'indication de garde correspondante soit déclarée valide.

Selon un mode de réalisation de l'invention, l'unité centrale comporte un registre dupliqué d'indications de garde dont le contenu est une copie du registre d'indications de garde incorporée dans la deuxième unité de traitement. Les deuxièmes moyens de contrôle de validité sont aptes à contrôler la validité de la valeur d'une indication de garde contenue dans le registre dupliqué d'indications de garde.

Selon un mode de réalisation de l'invention, l'unité centrale comporte des deuxièmes moyens d'élaboration, aptes, à chaque fois que l'unité centrale reçoit une instruction modificatrice destinée à modifier la valeur d'une indication de garde et temporellement plus ancienne qu'une indication de branchement gardée par ladite indication de garde, à élaborer un deuxième signal drapeau représentatif du fait que cette instruction modificatrice a été ou non traitée par ladite deuxième unité.

Ainsi, selon un mode de réalisation de l'invention, le coeur de processeur comporte une deuxième mémoire du type FIFO associée à ladite deuxième unité de traitement et destinée à stocker temporairement les instructions qui sont destinées à cette deuxième unité de traitement. Les deuxièmes moyens d'élaboration comportent :
- un compteur cadencé par le signal d'horloge,
- des moyens d'initialisation aptes, à chaque fois que l'unité centrale reçoit une instruction modificatrice destinée à modifier la valeur d'une indication de garde, à initialiser le compteur à une valeur initiale correspondant au nombre de cycles d'horloge nécessaires pour que cette instruction modificatrice soit stockée dans la deuxième mémoire,
- des moyens logiques recevant, d'une part un premier signal logique représentatif de la valeur courante du compteur et, d'autre part un deuxième signal logique représentatif
- de la présence ou de l'absence de l'instruction modificatrice dans la mémoire, et
- du fait que le registre des indications de garde a ou non été mis à jour par cette instruction modificatrice après que celle-ci ait quitté ladite mémoire.

Les moyens logiques délivrent le deuxième signal drapeau et les deuxièmes moyens de contrôle de validité contrôlent la valeur de ce deuxième signal drapeau.

Selon un mode de réalisation de l'invention, la deuxième unité comporte des moyens de commande aptes à déterminer la présence ou l'absence de l'instruction modificatrice dans la mémoire.

Ces moyens de commande comportent, par exemple :
- un compteur de lecture incrémenté à chaque fois qu'une instruction est extraite de la deuxième mémoire,
- un compteur d'écriture incrémenté à chaque fois qu'une instruction est stockée dans la deuxième mémoire,
- un ensemble de registres élémentaires respectivement associés à l'ensemble des indications de garde,
- un premier bloc de commande apte, à chaque fois qu'une instruction modifiant la valeur d'une indication de garde est stockée dans la deuxième mémoire, à stocker la valeur courante du compteur d'écriture dans un champ principal du registre élémentaire associé à cette indication de garde,
- un deuxième bloc de commande apte à déterminer le caractère toujours présent de cette instruction modificatrice dans la deuxième mémoire, ce deuxième bloc de commande comportant des moyens de comparaison aptes à comparer le contenu dudit champ principal du registre élémentaire, avec la valeur courante du compteur de lecture.

Selon un mode de réalisation de l'invention, le compteur d'écriture et le compteur de lecture ont une taille binaire identique égale à la profondeur de la deuxième mémoire. A chaque compteur, est associé un bit de dépassement changeant de valeur à chaque fois que le compteur correspondant revient à sa valeur initiale. Chaque registre élémentaire comporte en outre un champ auxiliaire à un bit. Le premier bloc de commande est alors apte, à chaque fois qu'une instruction modifiant la valeur d'une indication de garde est stockée dans la deuxième mémoire, à stocker également la valeur courante du bit de dépassement du compteur d'écriture dans le champ auxiliaire du registre élémentaire correspondant. Le deuxième bloc de commande comporte alors des moyens de comparaison auxiliaires aptes à comparer la valeur courante du bit de dépassement du compteur de lecture avec le contenu du champ auxiliaire.

Ces moyens de comparaison auxiliaires comportent par exemple une porte logique NON OU EXCLUSIF (XNOR en langue anglaise).

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre schématiquement l'architecture générale d'un processeur selon l'invention;
- la figure 2 illustre plus en détail mais toujours schématiquement le coeur du processeur de la figure 1;

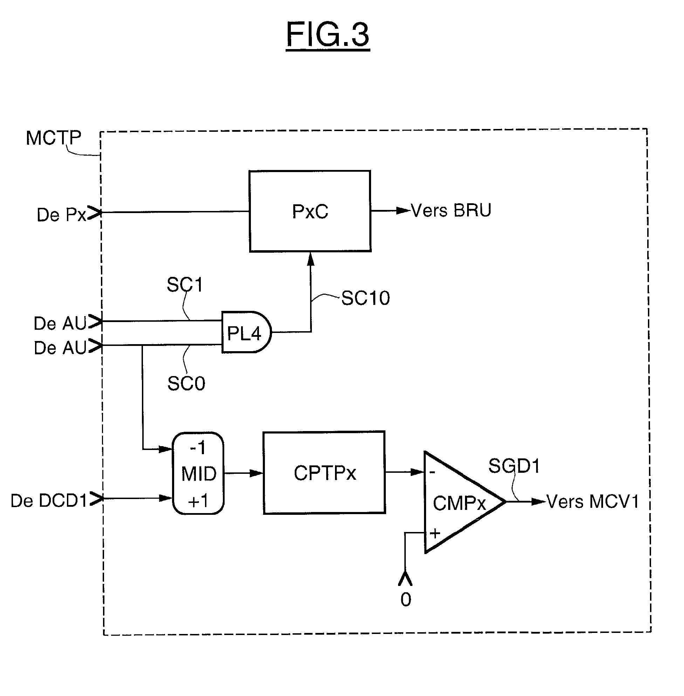

- la figure 3 illustre plus en détail une partie de l'unité centrale permettant la gestion des instructions de branchement;
- la figure 4 illustre plus en détail mais toujours schématiquement une architecture de module de branchement selon l'invention;
- les figures 5 et 6 illustrent plus en détail mais toujours schématiquement des moyens permettant la gestion d'instructions de branchement gardées selon l'invention;
- les figures 7 et 8 illustrent schématiquement des organigrammes relatifs à un mode de mise en oeuvre du procédé de gestion d'instructions de branchement gardées selon l'invention; et
- la figure 9 illustre plus en détail mais toujours schématiquement une autre partie des moyens permettant le contrôle du traitement effectif d'une instruction modificatrice du registre des indications de garde, au sein de l'unité arithmétique et logique.

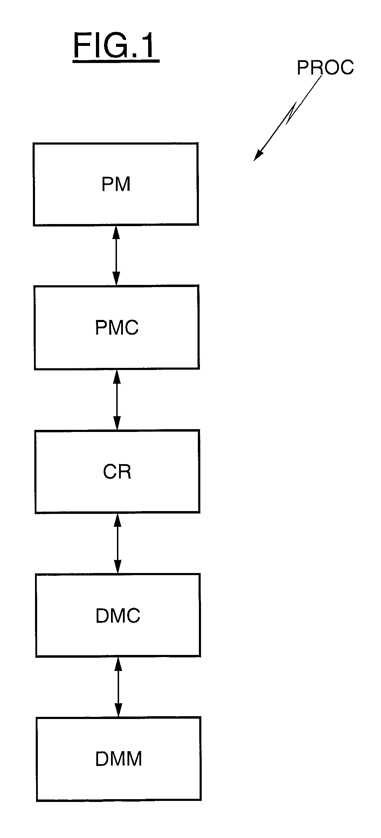

Sur la figure 1, la référence PROC désigne un processeur, par exemple un processeur de traitement numérique du signal.

Le processeur PROC comporte une mémoire-programme PM contenant les instructions de programme. Cette mémoire-programme est adressée par un contrôleur de mémoire PMC qui coopère avec le coeur CR du processeur. L'adresse dans la mémoire-programme est définie à partir de la valeur courante d'un compteur de programme PC.

Le coeur CR du processeur dialogue également avec un contrôleur de mémoire DMC qui contrôle l'accès à une mémoire de données DMM, par exemple deux bancs de mémoire SRAM.

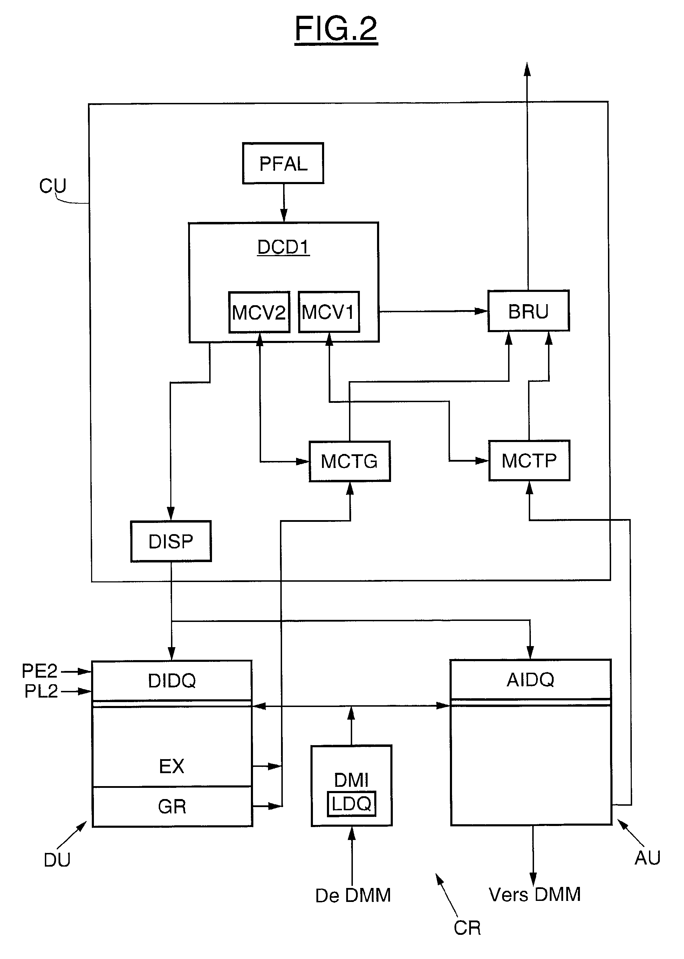

Sur la figure 2, on voit que le coeur du processeur comporte une unité centrale CU et plusieurs unités de traitement, ici deux unités de traitement distinctes DU et AU.

L'unité centrale CU est l'unité maîtresse du système. En général, elle gère toutes les activités de commande. Plus particulièrement, elle délivre au contrôleur de mémoire PMC des adresses programme et répartit les instructions correspondantes vers les différentes unités de traitement. Plus précisément, l'unité centrale CU comporte une interface PFAL avec le contrôleur de mémoire PMC, qui effectue notamment un formatage des instructions en instructions prêtes à être décodées.

Les instructions sont décodées ensuite dans un décodeur qui comporte en fait ici deux blocs de décodage successifs. La fonction globale du décodeur est de transformer chaque instruction machine en une ou plusieurs micro-instructions qui pourront être traitées par les différentes unités de traitement. Dans la suite du texte et à des fins de simplification, on désigne sous le vocable "d'instructions" une micro-instruction.

Une particularité de l'unité centrale CU du processeur selon l'invention réside dans le fait qu'elle comporte le module de branchement BRU qui traite les instructions de branchement.

Plus précisément, le premier bloc de décodage DCD1 va, en présence d'une instruction de branchement en sortie de l'interface PFAL, délivrer après un contrôle de validité, cette instruction de branchement au module de branchement BRU. Ceci s'effectue au cours d'un cycle du signal d'horloge qui cadence le coeur de processeur. Et, selon l'invention, à partir du moment où le bloc de décodage DCD 1 a effectué un contrôle de validité positif sur le détail duquel on reviendra ci-après, le module de branchement BRU traite cette instruction de branchement dans le même cycle courant et élabore la nouvelle valeur du compteur de programme PC qui va permettre de pointer dans la mémoire-programme à la nouvelle adresse sélectionnée.

Si, comme on le verra également plus en détail ci-après, le contrôle de validité s'avère négatif, le bloc de décodage DCD1 ne délivre pas l'instruction de branchement au module de branchement BRU et cette instruction de branchement reste en attente dans l'interface PFAL.

Les instructions différentes d'une instruction de branchement sont décodées en partie dans le bloc DCD1 et en partie (typiquement au cours du cycle d'horloge suivant) dans l'autre bloc de décodage à la sortie duquel sont disponibles les micro-instructions qui pourront être traitées par les unités de traitement AU ou DU.

Enfin, un moyen d'aiguillage DISP ("Dispatch" en langue anglaise) envoie les instructions générées par le bloc de décodage aux unités de traitement auxquelles sont destinées ces instructions.

L'unité de traitement DU est une unité arithmétique et logique qui exécute la plupart des opérations arithmétiques.

L'unité AU est une unité d'adressage qui effectue des calculs d'adresse effective nécessaires pour adresser les opérandes dans la mémoire. Cette unité AU contient tous les registres nécessaires à cette tâche ainsi que des registres de pointage d'adresse Px. x désigne le numéro du registre de pointage d'adresse P. Généralement, une instruction de branchement fait appel à l'un des registres de pointage d'adresse, par exemple le registre P3 et utilise le contenu de ce registre pour le calcul de la nouvelle valeur du compteur de programme PC.

L'unité AU comporte une mémoire du type FIFO, référencée AIDQ, destinée à stocker les instructions destinées à cette unité AU, en particulier les instructions modificatrices destinées à modifier les valeurs des registres de pointage d'adresse Px, en particulier le registre P3.

L'unité de traitement DU comporte une deuxième mémoire du type FIFO, référencée DIDQ, destinée à stocker les instructions destinées à ces unités DU, en particulier comme on le verra plus en détail ci-après des instructions modificatrices destinées à modifier des valeurs d'indications de garde.

Outre ces unités DU et AU, il est prévu une interface mémoire DMI qui contient notamment une autre mémoire du type FIFO, référencée LDQ, qui est destinée à recevoir et à stocker temporairement les données contenues dans les bancs de mémoires SRAM.

Enfin, l'une des unités de traitement, par exemple l'unité DU, comporte un registre des indications de garde GR. Ce registre stocke les valeurs courantes de toutes les indications de garde, qui sont par exemple au nombre de seize. Ce registre des indications de garde est situé au bas de la structure pipelinée de l'unité DU. A cet égard, la référence EX désigne la structure pipelinée des étages de l'unité DU. Dans la suite du texte, et à des fins de simplification, on supposera que l'unité DU ne comporte qu'un seul étage de pipeline entre la sortie de la mémoire DIDQ et le registre des indications de garde GR.

Le processeur décrit ici est à architecture découplée, permettant, après un temps de latence initiale, une vitesse d'exécution des instructions plus importante.

Le principe d'une architecture découplée est déjà connu de l'homme du métier, par exemple par la demande de brevet européen n° 0 949 565 ou par la demande de brevet européen n° 1 050 799. On rappelle maintenant brièvement le principe de fonctionnement d'une architecture découplée, l'homme du métier pouvant se référer pour plus de détails, si nécessaire, aux demandes de brevets européens précitées.

Dans une architecture découplée, certaines instructions faisant appel à des données mémorisées dans la mémoire de données DMM sont partitionnées en une micro-instruction destinée à l'unité DU et en une micro-instruction destinée à l'unité AU pour élaborer ladite donnée mémoire. Ainsi, par exemple, une instruction de chargement dans un registre d'une donnée mémorisée est partitionnée en deux micro-instructions ou instructions. Une première instruction est transmise à l'unité d'adressage (AU) qui calcule l'adresse effective de la donnée dans la mémoire de données. L'autre instruction, qui est une instruction de chargement dans le registre concerné, est temporairement stockée dans la mémoire DIDQ associée à l'unité arithmétique et logique. Cette deuxième instruction reste en attente jusqu'à ce que la donnée mémorisée, élaborée par l'unité d'adressage, soit disponible. Lorsqu'il en est ainsi, la mise à jour du registre concerné est effectivement réalisée.

Au bout d'un temps de latence initiale, l'unité d'adressage a pris de l'avance sur l'unité arithmétique et logique. La machine est alors "découplée". En contrepartie, vu de l'unité arithmétique et logique, la latence "fictive" est nulle.

On va maintenant décrire, en se référant plus particulièrement aux figurés 2, 3 et 4, la gestion des instructions de branchement selon l'invention.

On suppose, à cet égard, qu'une instruction de branchement utilise le contenu d'au moins l'un des registres de pointage d'adresse Px, par exemple le registre P3 contenu dans l'unité AU.

D'une façon générale, l'unité CU comporte des premiers moyens de contrôle de validité MCV1, aptes à effectuer au début du cycle courant du signal d'horloge au cours duquel le bloc de décodage DCD1 est prêt à recevoir une instruction de branchement, un contrôle de la validité du contenu du registre de pointage concerné Px. En fait, ce contrôle de validité est effectué sur un registre dupliqué de pointage d'adresse PxC. Ce registre dupliqué PxC est relié physiquement, par un conducteur électrique, au registre de pointage d'adresse Px contenu dans l'unité AU. En fait, comme on le verra plus en détail ci-après, la duplication effective du contenu du registre Px dans le registre dupliqué PxC est conditionnée par un signal de commande SC 10 délivré par une porte logique PL4 faisant partie de premiers moyens d'élaboration MCTP. Ces premiers moyens d'élaboration MCTP sont d'une façon générale aptes, à chaque fois que l'unité centrale reçoit une instruction modificatrice destinée à modifier le contenu d'un registre de pointage d'adresse, par exemple le registre Px, cette instruction modificatrice étant temporairement plus ancienne qu'une instruction de branchement impliquant ce registre Px, à élaborer un premier signal drapeau SGD1 représentatif du fait que cette instruction modificatrice a été ou non traitée par l'unité AU.

En effet, comme le module de branchement va utiliser le contenu de registres dupliqués, mais que les registres architecturaux de pointage d'adresse qui sont susceptibles d'être modifiés, sont situés dans l'unité AU, et donc à des niveaux beaucoup plus bas du pipeline, il faut s'assurer, avant d'utiliser le contenu d'un registre dupliqué, qu'il n'y a pas dans le pipeline, une instruction modificatrice temporellement plus ancienne, qui n'a pas encore mis à jour le registre de pointage d'adresse architectural correspondant.

Pour cela, les premiers moyens d'élaboration MCTP comportent:
- un compteur CPTPx associé à chaque registre dupliqué de pointage d'adresse PxC,
- des moyens d'incrémentation-décrémentation MID, et
- des moyens de comparaison CMPx aptes à comparer la valeur du compteur à la valeur nulle et à délivrer le premier signal drapeau SGD1 dont la valeur est représentative du résultat de ladite comparaison.

Les moyens d'incrémentation sont aptes, à chaque fois qu'une instruction modificatrice destinée à modifier le contenu d'un registre de pointage d'adresse est reçue par le décodeur DCD1 de l'unité centrale, à incrémenter le compteur CPTPx.

Les moyens de décrémentation sont aptes, à chaque fois que cette instruction modificatrice a été traitée par l'unité AU, à décrémenter le compteur. En fait, les moyens de décrémentation sont commandés par un signal logique SC0 issu de l'unité AU qui indique que l'instruction modificatrice a été effectivement traitée par l'unité AU.

La présence de la porte logique ET, référencée PL4, n'est nécessaire que pour traiter le cas où les instructions modificatrices sont également gardées. En effet, si aucune instruction modificatrice n'était gardée, le signal SC0 serait égal au signal SC10 et serait utilisé pour valider la recopie du contenu du registre de pointage d'adresse Px dans le registre dupliqué PxC.

Cependant, dans le cas où une instruction modificatrice est gardée, elle peut très bien ne pas être exécutée en raison de la valeur de l'indication de garde qui lui est associée. Mais, dans ce cas, elle doit quand même avoir été considérée comme ayant été traitée par l'unité AU, ce qui a pour effet de décrémenter le compteur CPTPx. Par contre, en fonction de la valeur de l'indication de garde, il y a lieu de modifier ou de ne pas modifier le contenu du registre dupliqué PxC. Le signal logique SC1 prend en compte la valeur de l'indication de garde d'une instruction modificatrice gardée.

Bien entendu, à l'initialisation du processeur, le compeur CPTPx est initialisé à la valeur nulle. Et, à chaque fois que l'unité centrale reçoit une instruction de branchement impliquant le registre Px, les premiers moyens de contrôle de validité MCV1, qui sont en fait des moyens testant simplement la valeur 0 ou 1 du signal SGD1, effectuent un contrôle de la validité du contenu du registre dupliqué PxC. Ce registre dupliqué est considéré comme ayant un contenu valide si le signal SGD1 a une valeur logique correspondant à une valeur nulle du compteur CPTPx.

Si tel est le cas, l'instruction de branchement est traitée par le module de branchement BRU.

Dans le cas contraire, elle est maintenue en attente de traitement.

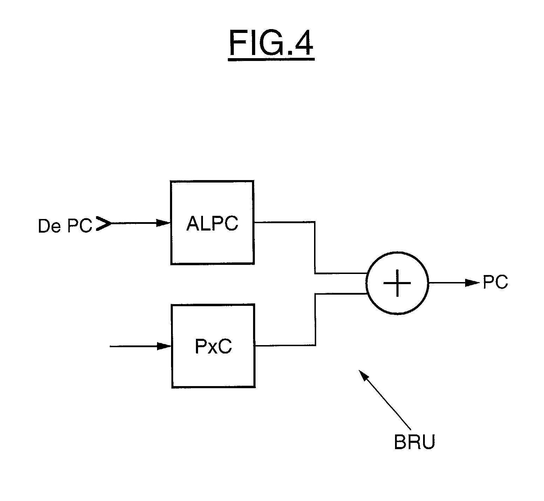

La figure 4 illustre très sommairement une mise en oeuvre de l'exécution d'une instruction de branchement. Un registre ALPC contient la valeur courante du compteur de programme PC. Cette valeur est additionnée à la valeur du registre dupliqué PxC pour fournir la nouvelle valeur du compteur PC.

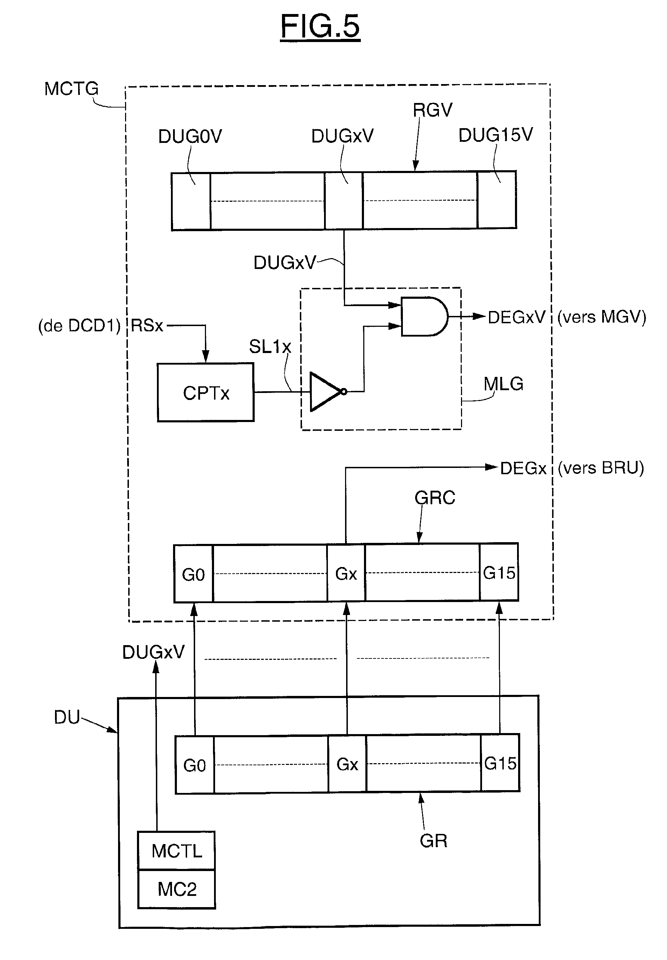

On décrit maintenant en se référant plus particulièrement aux figures 5 et suivantes, le cas des instructions de branchement gardées.

L'unité centrale comporte des deuxièmès moyens de contrôle de validité MCV2 (figure 2) aptes, en présence d'une instruction de branchement gardée, à effectuer au début du cycle courant un contrôle de la validité de la valeur de l'indication de garde affectée à ladite instruction de branchement gardée, cette indication de garde étant contenue dans le registre d'indications de garde GR.

L'instruction de branchement gardée sera alors effectivement reçue par l'unité centrale et traitée par le module de branchement BRU dans le même cycle courant d'horloge, si la valeur de l'indication de garde correspondante est déclarée valide. Dans le cas contraire, cette instruction de branchement gardée est maintenue en attente de traitement jusqu'à ce que la valeur de l'indication de garde correspondante soit déclarée valide.

A cet égard, l'unité centrale comporte un registre dupliqué d'indications de garde GRC (figure 5) dont le contenu est une copie du registre d'indications de garde GR. Le registre dupliqué RGC est matériellement relié au registre GR.

L'unité centrale comporte par ailleurs des deuxièmes moyens d'élaboration MCTG aptes, à chaque fois que l'unité centrale reçoit une instruction modificatrice GMIx, destinée à modifier la valeur d'une indication de garde Gx, et temporellement plus ancienne qu'une instruction de branchement gardée par ladite indication de garde Gx, à élaborer un deuxième signal drapeau DEGxV représentatif du fait que cette instruction modificatrice a été ou non traitée par l'unité DU.

Pour déterminer si une telle instruction modificatrice a été ou non traitée par l'unité DU, il convient de vérifier
- que cette instruction modificatrice ne se situe pas entre la sortie du décodeur et l'entrée de la mémoire DIDQ,
- qu'une telle instruction modificatrice n'est pas toujours présente dans la mémoire DIDQ, et
- qu'elle a été effectivement traitée par l'étage de pipeline EX de l'unité DU pour mettre à jour le registre des indications de garde.

Pour tenir compte du fait qu'une instruction modificatrice GMIx peut se situer entre le décodeur et l'entrée de la mémoire DIDQ, on prévoit d'utiliser un compteur CPTx (en réalité un décompteur) cadencé par le signal d'horloge et initialisé par le bloc décodeur DCD1 à l'aide d'un signal RSx lorsque celui-ci décode l'instruction GMIx. Le compteur est ainsi initialisé à une valeur initiale correspondant au nombre de cycles d'horloge nécessaires pour que l'instruction modificatrice GMIx soit stockée dans la mémoire DIDQ. A titre indicatif, le nombre de cycles d'horloge peut être égal à deux ou trois.

Donc, tant que le compteur CPTx n'aura pas atteint la valeur 0, cela signifiera qu'une instruction GMIx destinée à modifier la valeur de l'indication de garde Gx et temporellement plus ancienne qu'une instruction de branchement gardée par l'indication de garde Gx, se situera entre le décodeur DCD1 et l'entrée de la mémoire DIDQ.

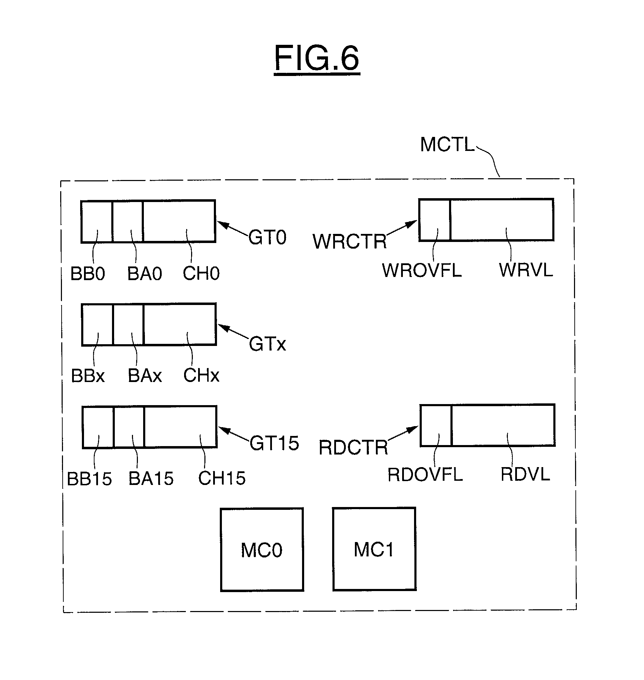

Pour déterminer si une telle instruction modificatrice GMIx est présente ou absente dans la mémoire DIDQ, on utilise des moyens de commande MCTL incorporés dans l'unité DU dont on va maintenant décrire plus en détail la structuré et le fonctionnement en se référant plus particulièrement aux figures 6, 7 et 8.

Dans un mode de réalisation, tel que celui illustré sur la figure 6, les moyens de commande MCTL comportent un compteur de lecture RDCTR, circulaire, incrémenté à chaque fois qu'une instruction, quelle qu'elle soit, est extraite de la deuxième mémoire. DIDQ.

Les moyens MCTL comportent par ailleurs un compteur d'écriture WRCTR, circulaire, incrémenté à chaque fois qu'une instruction, quelle qu'elle soit, est stockée dans la deuxième mémoire DIDQ.

Dans l'exemple décrit ici, les deux compteurs ont une taille identique. Cette taille identique est un nombre de bits nécessaire à coder en binaire la profondeur de la deuxième mémoire DIDQ. Dans l'exemple illustré, puisque la mémoire DIDQ a une profondeur de quatre, les compteurs sont des compteurs sur deux bits, c'est-à-dire que la valeur courante WRVL du compteur d'écriture WRCTR et la valeur courante RDVL du compteur de lecture RDCTR sont des mots de deux bits. Bien entendu la profondeur de la FIFO peut être plus importante.

Par ailleurs, à chaque compteur est associé un bit de dépassement (WROVFL pour le compteur d'écriture et RDOVFL pour le compteur de lecture). Ce bit de dépassement change de valeur à chaque fois que le compteur correspondant revient à sa valeur initiale. En d'autres termes, au rythme des fenêtres circulaires successives de comptage, le bit de dépassement prend successivement les valeurs 0 et 1.

Outre le compteur d'écriture et le compteur de lecture, les moyens de commande MCTL comportent un ensemble de registres élémentaires GT0-GT15, respectivement associés à l'ensemble des indications de garde G0-G15. Ainsi, le registre élémentaire GTx est associé à l'indication de garde Gx portant le numéro x.

Chaque registre élémentaire GTx comporte un champ principal CHx, ainsi qu'un premier champ auxiliaire BAx et un deuxième champ auxiliaire BBx. On reviendra plus en détail sur la signification et la fonction de ces champs auxiliaires qui, dans l'exemple décrit ici, sont des champs à un bit.

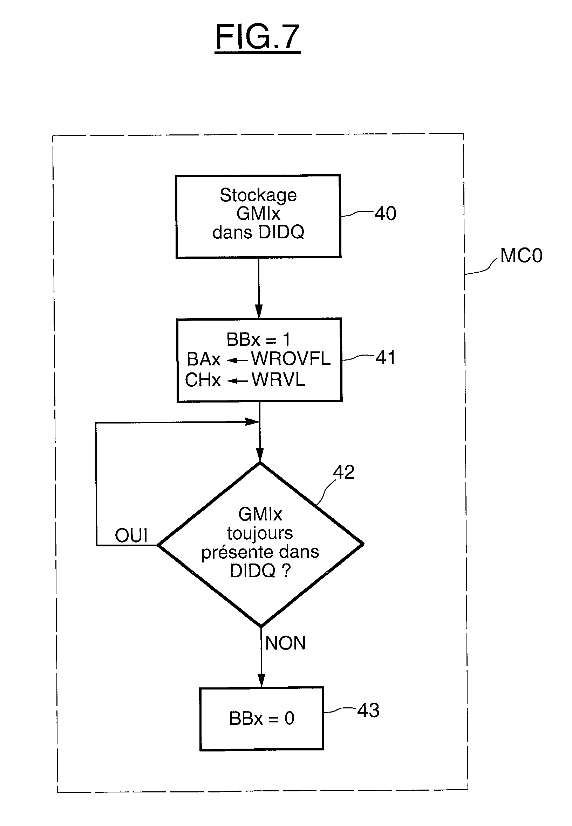

Les moyens de commande MCTL comportent, par ailleurs, quatre blocs de commande MC0-MC3 dont on va maintenant décrire plus en détail la fonctionnalité en se référant aux figures 7 et suivantes.

Le premier bloc de commande MC0 est apte, à chaque fois qu'une instruction GMIx modifiant la valeur de l'indication de garde Gx, est stockée dans la deuxième mémoire DIDQ (étape 40, figure 7), à stocker la valeur courante WRVL du compteur d'écriture WRCTR dans le champ principal CHx du registre élémentaire GTx associé à l'indication de garde Gx. Par ailleurs, le bit BBx (deuxième champ auxiliaire) du registre élémentaire GTx, initialement à 0, prend la valeur 1 pour indiquer qu'une instruction modificatrice GMIx a été effectivement stockée dans la mémoire DIDQ (étape 41).

Enfin, la valeur courante du bit de dépassement WROVFL du compteur d'écriture est stockée dans le premier champ auxiliaire (un bit) BAx du registre élémentaire GTx.

En fait, la valeur stockée dans le champ principal CHx du registre élémentaire GTx, dont la taille en bit est égale à la profondeur de la deuxième mémoire (ici deux bits), représente la position "symbolique" de la dernière instruction modificatrice GMIx écrite dans la mémoire DIDQ. Le premier champ auxiliaire BAx, destiné à recevoir la valeur courante du bit de dépassement du compteur d'écriture, permet de prendre en compte et de gérer les positions éventuelles respectives des pointeurs dans des fenêtres circulaires de comptage différentes.

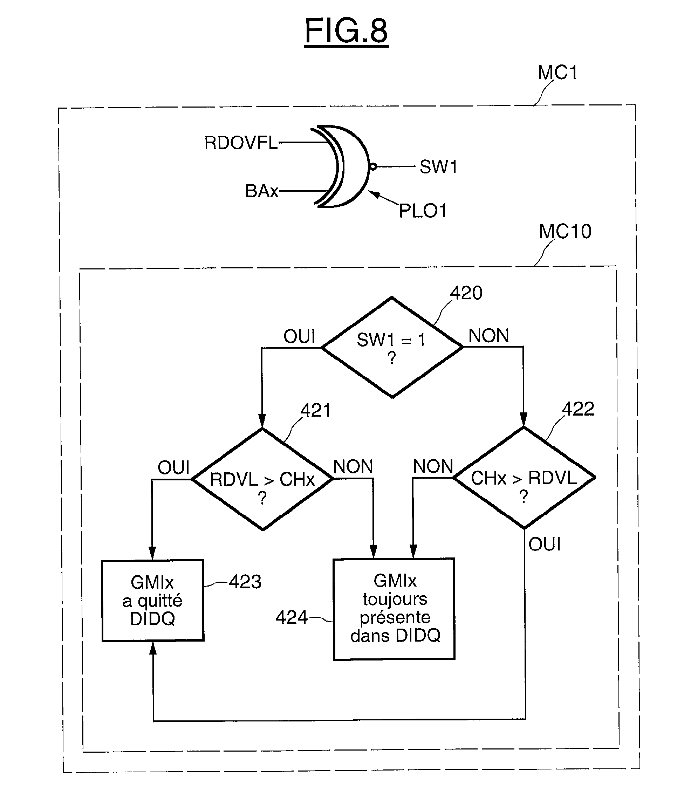

Dans l'étape 42, on va maintenant déterminer si l'instruction modificatrice GMIx est toujours présente dans la mémoire DIDQ, ou bien si elle a quitté cette mémoire. Ceci est effectué par le deuxième bloc de commande MC 1 et va maintenant être décrit plus en détail en se référant plus particulièrement à la figure 8.

Basiquement, le deuxième bloc de commande MC 1 comporte des moyens de comparaison MC10 qui vont comparer le contenu du champ principal CHx du registre élémentaire GTx avec la valeur courante RDVL du compteur de lecture. Cette comparaison va permettre de déterminer si l'instruction GMIx est toujours présente ou a quitté la mémoire DIDQ.

Ceci étant, afin de prendre en compte les effets des fenêtres circulaires de comptage, il est prévu que le deuxième bloc de commande MC1 comporte également des moyens de comparaison auxiliaires, formés ici d'une première porte logique NON OU EXCLUSIF (XNOR),référencée PLO1. Cette porte logique est destinée à élaborer un premier signal logique SW1 à partir du contenu du premier champ auxiliaire BAx et de la valeur du bit de dépassement RDOVFL du compteur de lecture.

En d'autres termes, ce signal logique SW1 indique si le pointeur de lecture PL2 est dans la même fenêtre circulaire que la position de la dernière instruction GMIx affectant l'indication de garde Gx.

On teste alors, dans l'étape 420, la valeur du premier signal logique SW1. Si ce signal logique est à 0, on teste, dans l'étape 422, si la valeur du mot contenu dans le champ principal CHx est strictement supérieure à la valeur courante RDVL du compteur de lecture. Si tel est le cas, alors cela signifie que l'instruction GMIx a quitté la mémoire DIDQ (étape 423) et on met alors le bit BBx à 0 (étape 43, figure 7).

Si, par contre, la valeur du mot contenu dans le champ principal CHx n'est pas strictement supérieure à la valeur courante RDVL du compteur de lecture, alors cela signifie que l'instruction modificatrice GMIx est toujours présente dans la mémoire DIDQ (étape 424). Dans ce cas, le bit BBx est maintenu à 1.

Si, par contre, dans l'étape 420, le signal logique SW1 est à 1, les moyens de comparaison MC10 vont tester si la valeur courante du compteur de lecture RDVL est strictement supérieure au mot contenu dans le champ principal CHx du registre élémentaire GTx (étape 421).

Si tel est le cas, cela signifie que l'instruction modificatrice GMIx a quitté la mémoire DIDQ (étape 423). Dans ce cas, le bit BBx est mis à 0 (étape 43, figure 7).

Dans le cas contraire, cela signifie (étape 424) que l'instruction modificatrice GMIx est toujours présente dans la mémoire DIDQ.

Les moyens MC0 et MC1 peuvent être aisément réalisés en utilisant des outils de synthèse logique.

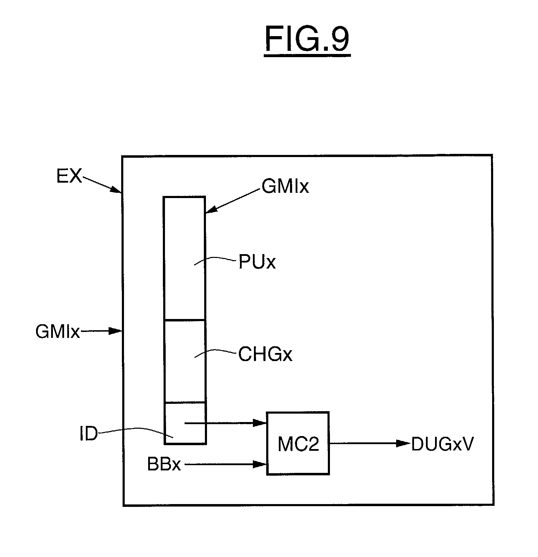

Une fois que l'instruction GMIx a quitté la mémoire DIDQ, il convient de vérifier si elle a été ou non traitée par l'étage EX afin de mettre à jour la valeur de l'indication de garde Gx. Cette vérification est le rôle du bloc de commande MC2 (figures 5 et 9).

Une instruction GMIx comporte (figure 9) un champ utile PUx représentatif du contenu proprement dit de l'instruction, un champ CHGx identifiant l'indication de garde Gx, et un bit d'identification ID dont la valeur logique signifie que l'on est ou non en présence d'une instruction GMIx valide. Plus précisément, si le bit ID vaut 1 par exemple, cela signifie que l'instruction GMIx n'a pas encore été traitée par l'étage EX.

Le bloc de commande MC2 reçoit donc en entrée le bit d'identification ID et le bit BBx et délivre un signal logique DUGxV. Si ce signal logique vaut 0, cela signifie qu'une instruction GMIx est toujours en cours d'exécution. Par contre, si le signal DUGxV est à 1, cela signifie que cette instruction GMIx a été exécutée et que la valeur de l'indication de garde Gx a été mise à jour.

Si l'on revient maintenant à la figure 5, on voit que les deuxièmes moyens d'élaboration MCTG comportent un registre RGV contenant les seize valeurs des signaux logiques DUGxV.

Les moyens MCTG comportent par ailleurs des moyens logiques MLG, formés ici d'une porte logique ET et d'un inverseur. Ces moyens logiques reçoivent d'une part le premier signal logique SL1x représentatif de la valeur nulle ou non du compteur CPTx, et d'autre part le deuxième signal logique DUGxV issu du registre RGV.

La sortie de la porte logique ET fournit le deuxième signal drapeau DEGxV associé à l'instruction GMIx et dont le contrôle de la valeur logique va être effectué par les deuxièmès moyens de contrôle de validité MCV2, au début du cycle courant au cours duquel le décodeur DCD1 s'apprête à recevoir l'instruction de branchement gardée.

En fonction du résultat de ce contrôle de validité, l'instruction de branchement gardée va être ou ne pas être délivrée et traitée par le module de branchement BRU. Si elle doit être traitée par le module de branchement BRU, alors le module de branchement BRU va utiliser la valeur de l'indication de garde Gx contenue dans le registre dupliqué GRC (signal DEGx). En fonction de cette valeur, l'instruction de branchement sera effectivement exécutée ou non.

## Revendications

1. Procédé de gestion d'instructions de branchement au sein d'un processeur, le processeur comportant une mémoire-programme contenant des instructions de programe, et un coeur de processeur (CR) contenant plusieurs unités de traitement (AU, DU) et une unité centrale (CU), dans lequel l'unité centrale, à la réception d'une instruction de programme, délivre des instructions correspondantes aux différentes unité de traitement, **caractérisé par le fait que** le coeur de processeur (CR) étant cadencé par un signal d'horloge,une instruction de branchement reçue par l'unité centrale (CU) au cours d'un cycle courant, est traitée au cours de ce cycle courant.

2. Procédé selon la revendication 1, **caractérisé par le fait qu'**une première unité de traitement (AU) contient au moins un registre de pointage d'adresse (Px), **par le fait qu'**une instruction de branchement utilise le contenu d'au moins l'un des registres de pointage d'adresse, **par le fait qu'**on effectue au début dudit cycle courant un contrôle de la validité du contenu dudit registre de pointage concerné, et **par le fait que** ladite instruction de branchement est effectivement reçue par l'unité centrale et traitée, si ledit contenu est déclaré valide, et dans le cas contraire, cette instruction de branchement est maintenue en attente de traitement jusqu'à ce que ledit contenu soit déclaré valide.

3. Procédé selon la revendication 2, **caractérisé par le fait que** le contenu de chaque registre de pointage d'adresse (Px) est recopié dans un registre dupliqué de pointage d'adresse (PxC), et **par le fait que** le contrôle de la validité du contenu du registre de pointage concerné est un contrôle de la validité du contenu du registre dupliqué correspondant.

4. Procédé selon la revendication 3, **caractérisé par le fait qu'**à chaque fois que l'unité centrale (CU) reçoit une instruction modificatrice destinée à modifier le contenu d'un registre de pointage d'adresse (Px) et temporellement plus ancienne qu'une instruction de branchement impliquant. ce registre de pointage d'adresse, le contrôle de validité du contenu du registre dupliqué correspondant prend en compte **le fait que** cette instruction modificatrice a été ou non traitée par. ladite première unité (AU).

5. Procédé selon la revendication 4, **caractérisé par le fait qu'**à chaque fois qu'une instruction modificatrice destinée à modifier le contenu d'un registre de pointage d'adresse est reçue par l'unité centrale, on incrémente un compteur (CPTPx) associé à ce registre, **par le fait qu'**à chaque fois que cette instruction modificatrice a été traitée par l'unité d'adressage, on décrémente le compteur, **par le fait que** lorsqu'une instruction de branchement impliquant ce registre est prête à être délivrée à l'unité centrale, ledit contrôle de validité comporte le contrôle de la valeur du compteur, le contenu du registre dupliqué correspondant audit registre de pointage d'adresse impliqué étant déclaré valide si la valeur du compteur est égale à zéro.

6. Procédé selon l'une des revendications précédentes, **caractérisé par le fait qu'**une deuxième unité de traitement (DU) contient un registre d'indications de garde (GR), par le fait **par le fait qu'**en présence d'une instruction de branchement gardée, on effectue au début dudit cycle courant un contrôle de la validité de la valeur de l'indication de garde affectée à ladite instruction de branchement et contenue dans le registre d'indications de garde, et **par le fait que** ladite instruction de branchement gardée est effectivement reçue par l'unité centrale et traitée, si la valeur de l'indication de garde correspondante est déclarée valide, et dans le cas contraire, cette instruction de branchement gardée est maintenue en attente de traitement jusqu'à ce que la valeur de l'indication de garde correspondante soit déclarée valide.

7. Procédé selon la revendication 6, **caractérisé par le fait que** contenu du registre d'indications de garde est recopié dans un registre dupliqué d'indications de garde (RGC), et **par le fait que** le contrôle de la validité de la valeur d'une indication de garde est un contrôle de la validité de la valeur de l'indication de garde correspondante contenue dans le registre dupliqué d'indications de garde.

8. Procédé selon la revendication 7, **caractérisé par le fait qu'**à chaque fois que l'unité centrale reçoit une instruction modificatrice (GMIx) destinée à modifier la valeur d'une indication de garde et temporellement plus ancienne qu'une instruction de branchement gardée par ladite indication de garde, le contrôle de validité de la valeur de l'indication de garde contenu dans le registre dupliqué prend en compte **le fait que** cette instruction modificatrice a été ou non traitée par ladite deuxième unité.

9. Procédé selon la revendication 8, **caractérisé par le fait que** le coeur de processeur comporte une mémoire du type FIFO (DIDQ) associée à ladite deuxième unité de traitement et destinée à stocker temporairement les instructions qui sont destinées à cette deuxième unité de traitement, **par le fait qu'**à chaque fois que l'unité centrale reçoit une instruction modificatrice (GMIx) destinée à modifier la valeur d'une indication de garde, on initialise un compteur cadencé par le signal d'horloge à une valeur initiale correspondant au nombre de cycles d'horloge nécessaires pour que cette instruction modificatrice soit stockée dans la mémoire (DIDQ), et **par le fait que** ledit contrôle de validité prend en compte à la fois
- la valeur courante du compteur (CPTx),
- la présence ou l'absence de l'instruction modificatrice dans la mémoire (DIDQ), et
- **le fait que** le registre des indications de garde (GR) a ou non été mis à jour par cette instruction modificatrice (GMIx) après que celle-ci ait quitté ladite mémoire.

10. Procédé selon la revendication 9, **caractérisé par le fait qu'**à chaque fois qu'on extrait une instruction de la mémoire (DIDQ) on incrémente un compteur de lecture, **par le fait qu'**à chaque fois qu'on stocke une instruction dans la on incrémente un compteur d'écriture, **par le fait qu'**à chaque fois qu'on stocke dans la mémoire (DIDQ) une instruction modificatrice (GMIx) modifiant la valeur d'une indication de garde, on mémorise la valeur courante du compteur d'écriture, et **par le fait que** la détermination du caractère toujours présent de cette instruction modificatrice dans la mémoire comporte la comparaison de ladite valeur courante mémorisée du compteur d'écriture avec la valeur courante du compteur de lecture.

11. Procédé selon la revendication 10, **caractérisé par le fait que** le compteur d'écriture et le compteur de lecture ont une taille binaire identique égale à la profondeur de la mémoire, **par le fait qu'**on associe à chaque compteur un bit de dépassement changeant de valeur à chaque fois que le compteur correspondant revient à sa valeur initiale, **par le fait qu'**à chaque fois qu'on stocke dans la mémoire une instruction modifiant la valeur d'une indication de garde, on mémorise également la valeur courant du bit de dépassement du compteur d'écriturè, et **par le fait que** la détermination du caractère toujours présent de cette instruction modificatrice dans la deuxième mémoire comporte également la comparaison de la valeur courante du bit de dépassement du compteur de lecture avec ladite valeur mémorisée du bit de dépassement du compteur d'écriture.

12. Processeur, comportant une mémoire-programme contenant des instructions de programme, et un coeur de processeur (CR) contenant plusieurs unités de traitement et une unité centrale apte, à la réception d'une instruction de programme, à délivrer des instructions correspondantes aux différentes unité de traitement, **caractérisé par le fait que** le coeur de processeur étant cadencé par un signal d'horloge, l'unité centrale (CU) comporte un module de branchement apte à recevoir une instruction de branchement au cours d'un cycle courant d'horloge, et à traiter cette instruction de branchement au cours de ce cycle courant.

13. Processeur selon la revendication 12, **caractérisé par le fait qu'**une première unité de traitement (AU) contient au moins un registre de pointage d'adresse (Px), **par le fait qu'**une instruction de branchement utilise le contenu d'au moins l'un des registres de pointage d'adresse, **par le fait que** l'unité centrale comporte des premiers moyens de contrôle de validité (MCV1) aptes à effectuer au début dudit cycle courant un contrôle de la validité du contenu dudit registre de pointage concerné, et **par le fait que** ladite instruction de branchement est effectivement reçue par l'unité centrale et traitée si ledit contenu est déclaré valide, et dans le cas contraire, cette instruction de branchement est maintenue en attente dans la mémoire-programme jusqu'à ce que ledit contenu soit déclaré valide.

14. Processeur selon la revendication 13, **caractérisé par le fait que** l'unité centrale comporte, pour chaque registre de pointage d'adresse (Px),un registre dupliqué de pointage d'adresse (PxC), dont le contenu est une copie du registre de pointage d'adresse correspondant, et **par le fait que** les premiers moyens de contrôle de validité (MCV1) sont aptes à contrôler la validité du contenu du registre dupliqué correspondant.

15. Processeur selon la revendication 14, **caractérisé par le fait que** l'unité centrale comporte des premiers moyens d'élaboration (MCT1), aptes à chaque fois que l'unité centrale reçoit une instruction modificatrice destinée à modifier le contenu d'un registre de pointage d'adresse (Px) et temporellement plus ancienne qu'une instruction de branchement impliquant ce registre de pointage d'adresse, à élaborer un premier signal drapeau (SGD1) représentatif du fait que cette instruction modificatrice a été ou non traitée par ladite première unité.

16. Processeur selon la revendication 15, **caractérisé par le fait que** les premiers moyens d'élaboration (MCTP) comportent
un compteur (CPTPx) associé à chaque registre dupliqué de pointage d'adresse (PxC),
des moyens d'incrémentation (MID) aptes à chaque fois qu'une instruction modificatrice destinée à modifier le contenu d'un registre de pointage d'adresse est reçue par l'unité centrale, incrémenter le compteur associé à ce registre,
des moyens de décrémentation (MID) aptes à chaque fois que cette instruction modificatrice a été traitée par la première unité de traitement, à décrémenter le compteur,
des moyens de comparaison (CMPx) aptes à comparer la valeur du compteur à la valeur nulle, et à délivrer le premier signal drapeau (SGD1) dont la valeur est représentative du résultat de ladite comparaison,
et **par le fait que** les premiers moyens de contrôle de validité (MCV1) contrôlent la valeur du premier signal drapeau, le contenu du registre dupliqué correspondant audit registre de pointage d'adresse impliqué étant déclaré valide si la valeur du signal drapeau correspond à une valeur du compteur égale à zéro.

17. Processeur selon l'une des revendications 12 à 16, **caractérisé par le fait qu'**une deuxième unité de traitement (DU) contient un registre d'indications de garde (GR), par le fait **par le fait que** l'unité centrale comporte des deuxièmes moyens de contrôle de validité (MCV2) aptes en présence d'une instruction de branchement gardée, à effectuer au début dudit cycle courant un contrôle de la validité de la valeur de l'indication de garde affectée à ladite instruction de branchement et contenue dans le registre d'indications de garde, et **par le fait que** ladite instruction de branchement gardée est effectivement reçue par l'unité centrale et traitée,si la valeur de l'indication de garde correspondante est déclarée valide, et dans le cas contraire, cette instruction de branchement gardée est maintenue en attente de traitement jusqu'à ce que la valeur de l'indication de garde correspondante soit déclarée valide.

18. Processeur selon la revendication 17, **caractérisé par le fait que** l'unité centrale (CU) comporte un registre dupliqué d'indications de garde (GRC) dont le contenu est une copie du registre d'indications de garde (GR), et **par le fait que** les deuxièmes moyens de contrôle de validité sont aptes à contrôler la validité de la valeur d'une indication de garde contenue dans le registre dupliqué d'indications de garde.

19. Processeur selon la revendication 18, **caractérisé par le fait que** l'unité centrale comporte des deuxièmes moyens d'élaboration (MCTG), aptes à chaque fois que l'unité centrale reçoit une instruction modificatrice (GMIx) destinée à modifier la valeur d'une indication de garde(Gx) et temporellement plus ancienne qu'une instruction de branchement gardée par ladite indication de garde, à élaborer un deuxième signal drapeau (DEGxV) représentatif du fait que cette instruction modificatrice a été ou non traitée par ladite deuxième unité.

20. Processeur selon la revendication 19, **caractérisé par le fait que** le coeur de processeur comporte une mémoire du type FIFO (DIDQ) associée à ladite deuxième unité de traitement et destinée à stocker temporairement les instructions qui sont destinées à cette deuxième unité de traitement, **par le fait que** les deuxièmes moyens d'élaboration comportent
un compteur (CPTx) cadencé par le signal d'horloge,
des moyens d'initialisation aptes à chaque fois que l'unité centrale reçoit une instruction modificatrice (GMIx) destinée à modifier la valeur d'une indication de garde, à initialiser le compteur à une valeur initiale correspondant au nombre de cycles d'horloge nécessaires pour que cette instruction modificatrice soit stockée dans la mémoire (DIDQ),
des moyens logiques (MLG) recevant d'une part un premier signal logique (SL1x) représentatif de la valeur courante du compteur et d'autre part un deuxième signal logique (DUGxV) représentatif
- de la présence ou de l'absence de l'instruction modificatrice dans la mémoire, et
- du fait que le registre des indications de garde a ou non été mis à jour par cette instruction modificatrice après que celle-ci ait quitté ladite mémoire,
**par le fait que** les moyens logiques délivrent le deuxième signal drapeau (DEGxV),
et **par le fait que** les deuxièmes moyens de contrôle de validité (MCV2) contrôlent la valeur du deuxième signal drapeau.

21. Processeur selon la revendication 20, **caractérisé par le fait que** la deuxième unité (DU) comporte des moyens de commande (MCTL) aptes à déterminer la présence ou de l'absence de l'instruction modificatrice dans la mémoire,
**par le fait que** ces moyens de commande comportent
un compteur de lecture incrémenté à chaque fois qu'une instruction est extraite de la deuxième mémoire,
un compteur d'écriture incrémenté à chaque fois qu'une instruction est stockée dans la deuxième mémoire,
un ensemble de registres élémentaire (GTx) respectivement associés à l'ensemble des indications de garde,
un premier bloc de commande (MC0) apte, à chaque fois qu'une instruction modifiant la valeur d'une indication de garde est stockée dans la deuxième mémoire, à stocker la valeur courante du compteur d'écriture dans un champ (CHx) du registre élémentaire associé à cette indication de garde,
un deuxième bloc de commande (MC1) apte à déterminer le caractère toujours présent de cette instruction modificatrice dans la mémoire, et comportant des moyens de comparaison entre ledit champ du registre élémentaire et la valeur courante du compteur de lecture.

22. Processeur selon la revendication 21, **caractérisé par le fait que** le compteur d'écriture et le compteur de lecture ont une taille identique égale à la profondeur de la deuxième mémoire, **par le fait qu'**à chaque compteur est associé un bit de dépassement changeant de valeur à chaque fois que le compteur correspondant revient à sa valeur initiale, **par le fait que** chaque registre élémentaire comporte en outre un champ auxiliaire à un bit (BAx), **par le fait que** le premier bloc de commande (MC0) est apte, à chaque fois qu'une instruction modifiant la valeur d'une indication de garde est stockée dans la deuxième mémoire (DIDQ), à stocker également la valeur courante du bit de dépassement du compteur d'écriture dans le champ auxiliaire (BAx) du registre élémentaire correspondant, et **par le fait que** le deuxième bloc de commande comporte des moyens de comparaison auxiliaires aptes à comparer la valeur courante du bit de dépassement du compteur de lecture avec le contenu du champ auxiliaire (BAx).

23. Processeur selon la revendication 22, **caractérisé par le fait que** les moyens de comparaison auxiliaires comportent une porte logique NON OU EXCLUSIF (PLO1).

24. Processeur selon l'une des revendications 12 à 23, **caractérisé par le fait qu'**il est à architecture découplée.
